# EUROPEAN PATENT APPLICATION

(11) **EP 2 172 742 A1**
(43) Date of publication of application: **07.04.2010**
(21) Application number: 08851495.5
(22) Date of filing: 18.11.2008
(51) Int. Cl.: G01C 21/00, G06F 3/041, G06F 3/048, G08G 1/0969, G09B 29/10

(54) **NAVIGATION DEVICE**

(30) Priority: 20.11.2007 JP 2007300443
(71) Applicant: Aisin AW Co., Ltd., Fujii-cho Anjo-shi Aichi 444-1192 (JP)
(72) Inventor: KOJIMA, Yuki, Okazaki-shi Aichi 444-8564 (JP); HIGUCHI, Sadafumi, Okazaki-shi Aichi 444-8564 (JP); HOSHINO, Tsuyoshi, Okazaki-shi Aichi 444-8564 (JP); MAEKAWA, Naoki, Okazaki-shi Aichi 444-8564 (JP)
(74) Representative: TBK-Patent
(86) International application number: PCT/JP2008/070930
(87) International publication number: WO 2009/066656

(57) **Abstract**

A vehicle owner can express a display screen that displays a map in a color that matches an interior design.

On a map view screen 3c1 that displays a map for route guidance on a display screen 3C, icons 3a, 3b that indicate current navigation functions, and icons 3c to 3e that indicate touch switches that are operated to change current navigation functions are displayed. A color change operation screen 3c2 is used to change the color of the icons 3a, 3b that indicate navigation functions and the icons 3c to 3e that are operated to change navigation functions on the display screen 3C. Accordingly, the display screen 3C can be expressed in colors that match the interior design of the vehicle. Moreover, the colors of the map view screen 3c1 used for route guidance do not change; only the icons 3a, 3b that indicate navigation functions and icons 3c to 3e that are operated to change navigation functions are changed. The general map colors are thus maintained according to natural usage conditions that blend into the overall design.

## Description

### TECHNICAL FIELD

The present invention relates to a navigation device for on-vehicle use, and more specifically relates to a navigation device in which an image color of a screen displayed on a display can be set at will.

### BACKGROUND ART

Conventional navigation devices are described in Patent Documents 1 to 4.
A navigation device described in Patent Document 1 includes a map data storage unit that stores map data constituted from a plurality of drawing objects; an attribute information storage unit that stores attribute information linked to the drawing objects; a display unit that displays a map based on the map data stored in the map data storage unit; a touch panel that is integrally formed with the display unit and receives external input; and an object drawing control unit that, when a predetermined operation is performed with respect to one drawing object among the plurality of drawing objects on the basis of external input to the touch panel, changes the technique of drawing other drawing objects having the same attribute information as the drawing object. Patent Document 1 thus discloses art that improves convenience and operability in changing the technique of drawing an image of a map, and customizes the image drawing of the map according to a user's liking.

A navigation device described in Patent Document 2 includes storage means for storing map information; control means for reading map information from the storage means and generating display data; input means for setting a color signal for each primary color; and display means for displaying on the basis of display data, wherein the control means distinguishes color data from the map information and generates the display data such that at least color data relating to background color among the color data is a predetermined display color, based on color conversion data previously set by the input means. Patent Document 2 thus discloses art that enables a user to consider the color balance of his or her display device and set the most easily visible background color in accordance with the user's color recognition abilities and preferences. During driving and the like, the user can thus distinguish the contents of display while spending less time looking at the screen. According to the disclosed art, three types of such settings can be easily preset and applied should there be a change in circumstances.

A navigation device described in Patent Document 3 includes a map data display device that reads map data recorded in a recording medium and having a plurality of color codes, and displays a color map in accordance with the color codes. The map data display device is provided with a set of fixed parameters for applying changes to elements of color expressions that correspond to the plurality of color codes included in the map data reproduced from the recording medium. The fixed parameters are used when performing computational processing on the elements of color expressions that correspond to a portion of the color codes among the plurality of color codes, in order to change and display the elements of color expressions. Patent Document 3 thus discloses art that enables the user to change the color tone, brightness, and contrast of an image displayed on a screen in accordance with the surrounding environment or based on the user's tastes. For example, the screen can become easier to view by changing the brightness of the screen in accordance with day and night, and roads can be highlighted by emphasizing the colors indicating roads.

A navigation device described in Patent Document 4 includes input means for inputting prescribed information allocated by a user; storage means for storing a plurality of pieces of menu setting information correlated with respective pieces of the prescribed information; read-out means for reading out the corresponding menu setting information from the storage means in response to the input prescribed information; and menu display means for referencing the read-out menu setting information and displaying the menu in a display mode corresponding thereto. Patent Document 4 thus discloses art that displays the menu in a mode corresponding to the user's liking. For example, for a user with good vision, cumbersome operations such as content rotation and menu screen scrolling are reduced by setting a small display size and quantity of contents and by using a smaller font size. However, for a user with poor vision, the display size, quantity, and font size are set large so that the contents are surely visible.
Patent Document 1: Japanese Patent Application Publication No. JP-A-2003-344054
Patent Document 2: Japanese Patent Application Publication No. JP-A-H06-309429
Patent Document 3: Japanese Patent Application Publication No. JP-A-H09-127863
Patent Document 4: Japanese Patent Application Publication No. JP-A-2006-260266

### DISCLOSURE OF THE INVENTION

### Problem to be Solved by the Invention

The art in Patent Document 1 selects map colors from a color palette and changes the colors, and the art in Patent Document 2 improves visibility by adjusting colors based on the map background. However, a control is performed nowadays such that the colors of roads change depending on the degree of congestion, based on traffic information from the Vehicle Information and Communication System (VICS (registered trademark)). If colors are individually changed, it may not be possible to reflect congestion information received from the VICS on the display, making the received information useless.
According to the art of Patent Document 3, a color pattern is selected from the recording medium, and changes are applied to the elements of color expression that correspond to the plurality of color codes included in the map data. Such art enables elaborate color expression, but also has the same problem described with regard to the art in Patent Documents 1 and 2.

According to the art of Patent Document 4, the font size, color, layout, and the like of the menu is stored for each user to improve user operability. Such art presumes the existence of menu settings information in particular, such as the font size and type of characters included in the menu, content quantity, display size, contents, overall layout of the screen, and colors, and changes at least one of these. But such art most likely cannot be used in a navigation device that displays a map for route guidance on a display, because of character overlap and difficulty distinguishing roads.
Nowadays, there are hardly any vehicles in which the navigation device displays a menu screen while the vehicle is traveling, and even if not performing route guidance, normally the navigation device is often used in a mode that indicates the host vehicle position on a map.
In addition, while the vehicle is designed to match the user's tastes mainly in terms of the exterior and interior, such as the seats, such consideration does not yet extend to the colors of the display screen of the display. There are conventional navigation devices that change the colors of the display screen according to day and night, however, even trademark-like icons with meaningful colors are changed. Therefore, information that can be acquired from the overall screen completely changes depending on whether it is day or night.

The present invention was devised in order to solve the above problems, and it is an object of the present invention to provide a navigation device that enables an owner of a vehicle to realize a display screen that displays a map in colors that match an interior design of the vehicle.

### Means for Solving the Problem

A navigation device according to claim 1 of the present invention finds routes from a vehicle departure point to a destination and provides route guidance along a selected route. The navigation device is characterized by including: a display screen that displays a map for the route guidance on a display, and displays icons that represent current navigation functions and/or icons of touch switches for operations that change current navigation functions superposed on a view screen of the map; and a color change operation screen that changes a color of the icons that represent navigation functions and/or the icons that represent touch switches that are operated to change current navigation functions on the display screen, wherein the icons include data on whether color changing is enabled or disabled depending on the type of icon, and the color of an icon for which color changing is enabled is changed in response to a color change operation.
Here, displaying a map for route guidance on a display is not intended to specify the mode of display. The icons that indicate current navigation functions and/or the icons that indicate touch switches that are operated to change current navigation functions refer to one or both of the icons that indicate current navigation functions and the icons that indicate touch switches that are operated to change current navigation functions.
The display screen displays a map for route guidance, in addition to displaying the icons that represent current navigation functions and the icons that serve as touch switches for operations that change current navigation functions superposed, i.e., integrated, on the map view screen.
The color change operation screen can change the color of the icons that indicate current navigation functions and/or the icons that indicate touch switches that are operated to change current navigation functions on the display screen. Therefore, not only can the color be selectively set from specific colors such as blue, green, amber, and red, the color can also be changed to a color continuous from among such colors.
Furthermore, the icons that indicate current navigation functions and/or the icons that indicate touch switches that are operated to change current navigation functions include data on whether color changing is enabled or disabled depending on the type of icon. Therefore, the color of an icon for which color changing is enabled is changed in response to a color change operation. Obviously, in such case, the color of an icon having data that disables color changing is not changed. However, it is possible to change only brightness or prohibit brightness changes as well.

The navigation device according to claim 2 of the present invention finds routes from a vehicle departure point to a destination and provides route guidance along a selected route. The navigation device includes: a display screen that displays icons that indicate touch switches that operate navigation functions; and a color change operation screen that changes a color of the icons that indicate touch switches that operate navigation functions on the display screen.
Here, displaying a map for route guidance on a display is not intended to specify the mode of display.
The above phrase, a display screen that displays icons that indicate touch switches that operate navigation functions, refers to one or both of the icons that indicate current navigation functions and the icons that are operated to change current navigation functions. Based on the assumption that no navigation function settings have been performed, these changes are to be interpreted as performing a setting and such operations include all actions to that end. In other words, the phrase refers to icons that serve as touch switches for operations that change current navigation functions.
The color change operation screen can change the color of the icons that indicate current navigation functions and/or the icons that indicate touch switches that are operated to change current navigation functions on the display screen. Therefore, not only can the color be selectively set from specific colors such as blue, green, amber, and red, the color can be changed to a color continuous from among such colors.
Furthermore, the icons that indicate current navigation functions and/or the icons that indicate touch switches that are operated to change current navigation functions include data on whether color changing is enabled or disabled depending on the type of icon. Therefore, the color of an icon for which color changing is enabled is changed in response to a color change operation. Obviously, in such case, the color of an icon having data that disables color changing is not changed. However, it is possible to change only brightness or prohibit brightness changes as well.

The color change operation screen of the navigation device according to claim 3 of the present invention is simultaneously displayed on the same display screen as a screen that displays the icons that indicate navigation functions and/or the icons that indicate touch switches that are operated to change navigation functions. A display color of the screen that displays the icons that indicate navigation functions and/or the icons that indicate touch switches that are operated to change navigation functions can be changed from the screen.
The above phrase, the same display screen as a screen that displays the icons that indicate navigation functions and/or the icons that indicate touch switches that are operated to change navigation functions, means that on the same display screen, the color change operation screen and the screen that displays the icons that indicate navigation functions and the icons that are operated to change navigation functions, or displays either the icons that indicate navigation functions or the icons that are operated to change navigation functions, are set as the same screen to accurately match color changes. Accordingly, the most natural settings can be made when the color change operation screen takes up little surface area on the display screen.

The color change operation screen of the navigation device according to claim 4 of the present invention can set the color of the icons that indicate navigation functions and/or the icons that indicate touch switches that are operated to change navigation functions to a different color for day and night.
Here, setting the display color of the icons that indicate navigation functions and/or the icons that are operated to change navigation functions to a different color for day and night is achieved by detecting nighttime based on the lighting circuits of lamps or the like, and daytime is considered to be times when these are not lit. However, any means are acceptable provided that the display color can be set according to conditions that operate based on day and night.

The color change operation screen of the navigation device according to claim 5 of the present invention sets the display color of the icons that indicate navigation functions and/or the icons that indicate touch switches that are operated to change navigation functions on the display screen to a fixed brightness for day and night. The icons and the brightness of the display color of the icons that are operated to change navigation functions may change in accordance with a change in color. Therefore, even if the color changes, the brightness can be set fixed.

In the navigation device according to claim 6 of the present invention, the icons that indicate navigation functions and/or the icons that indicate touch switches that are operated to change navigation functions exclude icons used for trademark purposes.
Here, icons used for trademark purposes use picture trademarks that are registered trademarks to indicate stores such as McDonald's (a trade name), Kentucky Fried Chicken (a trade name), convenience stores, and the like. Therefore, the display method of such icons is not changed.

In the navigation device according to claim 7 of the present invention, the icons that indicate navigation functions and/or the icons that indicate touch switches that are operated to change navigation functions on the display screen are grouped, and a color is set per group.
In this case, grouped means that one or more icons is used as a unit of groups.
The number of groups is not limited.

In the navigation device according to claim 8 of the present invention, an icon for which color changing is disabled can be set with a brightness. The brightness setting may be fixed during color changing or varied. Color changes are prohibited regarding the icons for which color changing is disabled, and their brightness is adjusted in accordance with the brightness of the surrounding screen.

### Effects of the Invention

According to claim 1 of the present invention, in a navigation device that finds routes from a vehicle departure point to a destination and provides route guidance along a selected route, a map for the route guidance is displayed on a display screen, which also displays icons that indicate current navigation functions and icons that indicate touch switches that are operated to change current navigation functions superposed on the view screen of the map. A color change operation screen changes a color of the icons that indicate navigation functions and the icons that indicate touch switches that are operated to change navigation functions on the display screen.
Accordingly, the display screen can be expressed in colors that match the interior design of the vehicle. Moreover, the colors of the map used for route guidance do not change; only the colors of the icons that indicate navigation functions and the icons that are operated to change navigation functions are changed. It is thus possible to set colors according to natural usage conditions in terms of general map colors, which also blend well in terms of the overall design. Furthermore, instead of switching among three or four specific colors, colors can be more finely adjusted. Therefore, a desired color can be selected in accordance with ease of viewing the display screen and color preferences.
The icons that indicate navigation functions and/or the icons that indicate touch switches that are operated to change navigation functions include data on whether color changing is enabled or disabled depending on the type of icon. Therefore, the color of an icon for which color changing is enabled can be changed in response to a color change operation. In addition, depending on the need, brightness adjustments can still be made for icons having disabled color change data, and brightness adjustments can be made regardless of whether color changing is enabled or disabled.

According to claim 2 of the present invention, the navigation device that finds routes from a vehicle departure point to a destination and provides route guidance along a selected route includes: a display screen that displays icons that indicate touch switches that operate navigation functions; and a color change operation screen that changes a color of the icons that indicate touch switches that operate navigation functions on the display screen.
Accordingly, the display screen can be expressed in colors that match the interior design of the vehicle. Moreover, only the icons that indicate navigation functions and the icons that are operated to change navigation functions are changed. It is thus possible to set colors that blend well in terms of the overall design. Furthermore, instead of switching among three or four specific colors, colors can be more finely adjusted. Therefore, a desired color can be selected in accordance with ease of viewing the display screen and color preferences. A configuration that incorporates the constitution of claim 1 is especially preferred.
The icons that indicate navigation functions and/or the icons that indicate touch switches that are operated to change navigation functions include data on whether color changing is enabled or disabled depending on the type of icon. Therefore, the color of an icon for which color changing is enabled can be changed in response to a color change operation. In addition, depending on the need, brightness adjustments can still be made for icons having disabled color change data, and brightness adjustments can be made regardless of whether color changing is enabled or disabled.

The color change operation screen of the navigation device according to claim 3 of the present invention is displayed on the same screen as a screen that displays the icons that indicate navigation functions and/or the icons that indicate touch switches that are operated to change navigation functions on the display screen, and the display color of the icons that indicate navigation functions and the icons that indicate touch switches that are operated to change navigation functions can be changed from the screen. Therefore, in addition to the effects of claim 1 or 2, colors can be selected on the same screen so that there is no color disagreement between the color selected on the color change operation screen and the color of the icons that indicate navigation functions and the icons that are operated to change navigation functions.

The color change operation screen of the navigation device according to claim 4 of the present invention can set the display color of the icons that indicate navigation functions and the icons that indicate touch switches that are operated to change navigation functions to a different color for day and night. Therefore, in addition to the effects of any one of claims 1 to 3, when the color of the vehicle interior is in darkness, the image color at such time can serve as a light source and express a color different from that used during the day.

The color change operation screen of the navigation device according to claim 5 of the present invention can set the display color of the icons that indicate navigation functions and/or the icons that indicate touch switches that are operated to change navigation functions to a fixed brightness for day and night. Therefore, in addition to the effects of any one of claims 1 to 4, when the color of the vehicle interior is in darkness, the display remains natural and normal even in the transition from day to night and vice versa.

In the navigation device according to claim 6 of the present invention, the icons that indicate navigation functions and/or the icons that indicate touch switches that are operated to change navigation functions on the display screen exclude icons used for trademark purposes. Therefore, in addition to the effects of any one of claims 1 to 5, the usage format of emblematic icons serving as trademarks universally and commonly expressed or used for trademark purposes is not automatically changed.

In the navigation device according to claim 7 of the present invention, the icons that indicate navigation functions and/or the icons that indicate touch switches that are operated to change navigation functions on the display screen are grouped, and a color is set per group. Therefore, in addition to the effects of any one of claims 1 to 6, a specific icon can be set to an easily recognizable color.

In the navigation device according to claim 8 of the present invention, an icon for which color changing is disabled can be set with a brightness. Therefore, in addition to the effects of any one of claims 1 to 7, the brightness of the icon or a group of icons can be adjusted for greater or lesser contrast with a background map and set in consideration of the properties of the human eye.

### BRIEF DESCRIPTION OF THE DRAWINGS

[FIG. 1] FIG. 1 is a block diagram that shows an overall configuration of a navigation device according to a first embodiment of the present invention, wherein the overall configuration includes an expression of some functions of the navigation device.
[FIG. 2] FIG. 2 shows explanatory drawings that are displayed on a display of the navigation device according to the first embodiment of the present invention, wherein FIG 2(a) is a screen of a main menu, FIG. 2(b) is a screen of various settings, and FIG. 2(c) is a drawing of a screen of image color settings for setting color and brightness.
[FIG. 3] FIG. 3 is a flowchart of an image color processing routine of the navigation device according to the first embodiment of the present invention.
[FIG. 4] FIG. 4 is an explanatory drawing of an icon map stored in an icon storage unit according to a second embodiment of the present invention.
[FIG. 5] FIG. 5 is a flowchart of an essential portion of the image color processing routine of the navigation device according to the second embodiment of the present invention.
[FIG. 6] FIG. 6 is an explanatory drawing of a display screen that corresponds to FIG. 2(c) and is displayed on the display of the navigation device according to the second embodiment of the present invention.
[FIG. 7] FIG. 7 is an explanatory drawing of a display screen that corresponds to FIG. 2(c) and is displayed on the display of the navigation device according to a third embodiment of the present invention.
[FIG. 8] FIG. 8 is an explanatory drawing of an icon map stored in the icon storage unit according to a fourth embodiment of the present invention.
[FIG. 9] FIG. 9 is a flowchart of an essential portion of the image color processing routine of the navigation device according to the fourth embodiment of the present invention.

### Description of the Reference Numerals

- 1: COMPUTATION AND CONTROL UNIT
- 2: OPERATION UNIT
- 3: DISPLAY
- 4: SPEAKER
- 5: CURRENT POSITION DETECTION UNIT
- 6: DATA PROCESSING STORAGE UNIT
- 81: IMAGE COLOR PROCESSING UNIT
- 82: ICON STORAGE UNIT
- 83: COLOR CHANGE OPERATION SCREEN STORAGE UNIT
- 3A, 3B, 3C, 3D, 3E: DISPLAY SCREEN
- 3c1: MAP VIEW SCREEN
- 3c2: COLOR CHANGE OPERATION SCREEN
- 3e1: ICON VIEW SCREEN

### BEST MODES FOR CARRYING OUT THE INVENTION

### First Embodiment

Hereinafter, embodiments of the present invention will be explained with reference to the drawings. Note that in the embodiments, parts that have identical or equivalent functions are indicated by identical symbols and identical reference numbers in the drawings, so duplicate explanations will be omitted.

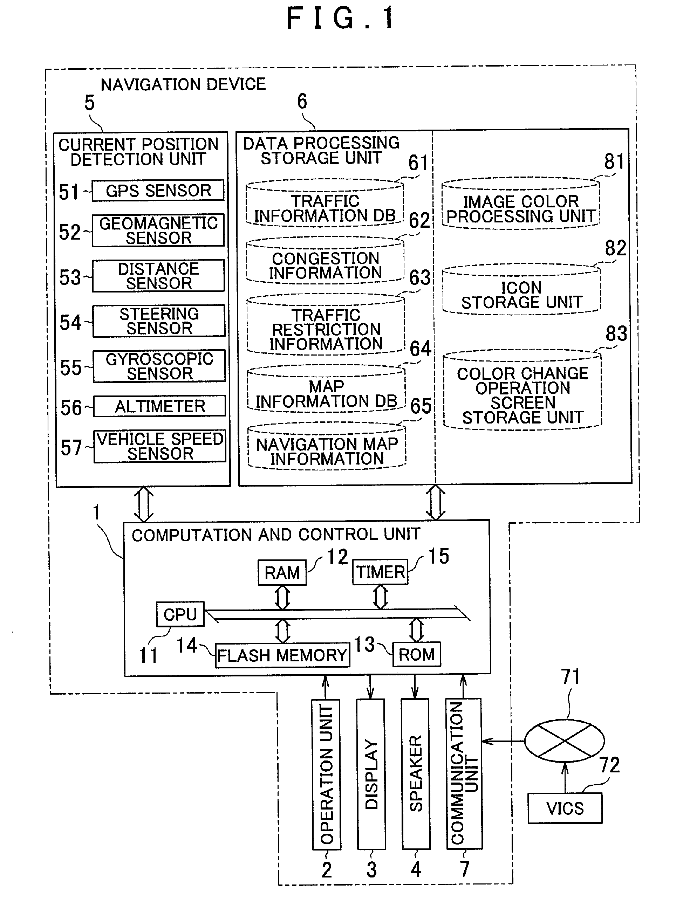

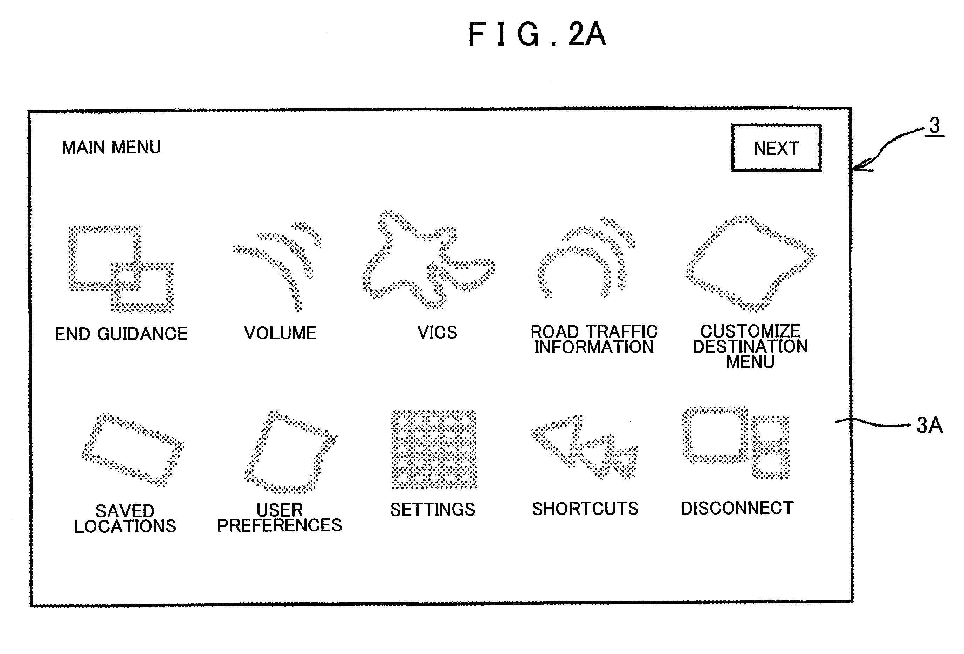

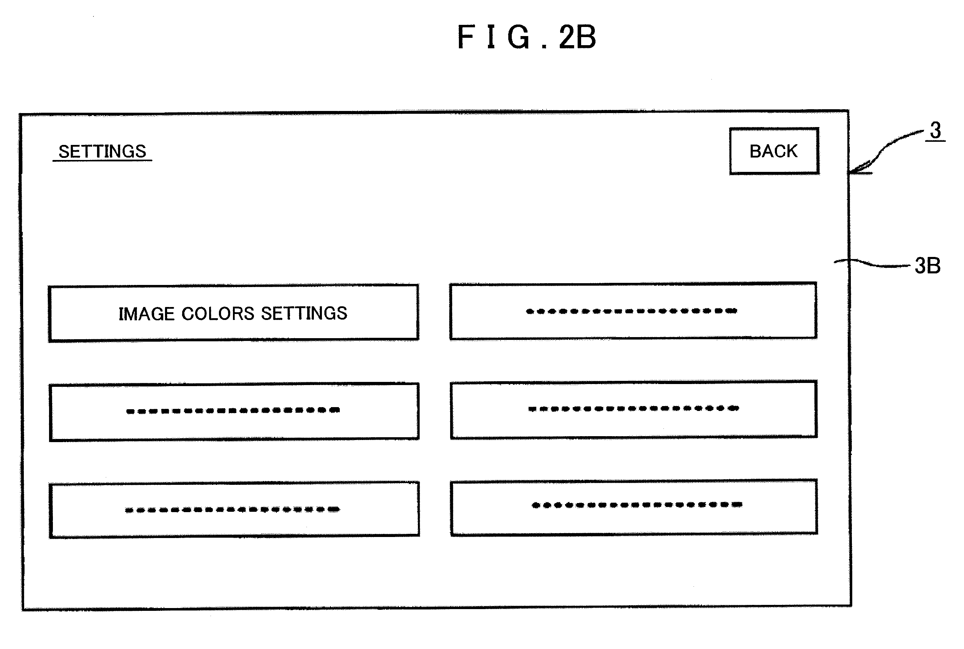

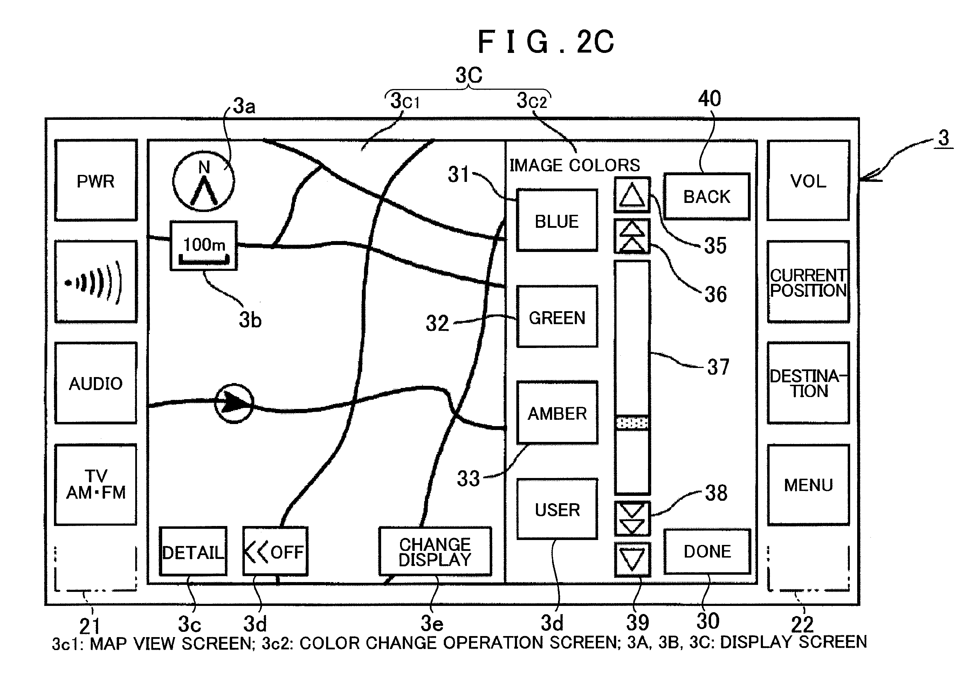

FIG. 1 is a block diagram that shows an overall configuration of a navigation device according to a first embodiment of the present invention, wherein the overall configuration includes an expression of some functions of the navigation device. FIG. 2 shows explanatory drawings of setting screens for performing various settings, which are displayed on a display of the navigation device according to the first embodiment of the present invention.

In FIG. 1, the navigation device according to the first embodiment is constituted from a computation and control unit 1, an operation unit 2, a display 3, a speaker 4, a current position detection unit 5, a data processing storage unit 6, and a communication unit 7. The computation and control unit 1 is formed from a microprocessor that performs various types of computational processing based on input information. The operation unit 2 includes various key input, audio input, touch switches, and the like through which operations from an operator such as a driver are accepted. The display 3 is formed from a liquid crystal display, an EL display, or the like, and displays information such as operation information for the operator and maps. The speaker 4 performs voice guidance that pertains to route guidance and guidance on traffic restriction information and congestion information. The current position detection unit 5 detects the current position of the host vehicle, and is formed from various types of sensors that enable the detection of the current location and heading of the host vehicle, and for example, the distance to a target object such as an intersection. The data processing storage unit 6 is formed from a readable, writable, high-storage-capacity hard disk that stores various data. The communication unit 7 communicates with a Vehicle Information and Communication System (VICS (registered trademark)) 72 and the like through a network 71.

The computation and control unit 1 that includes the microprocessor is provided with a CPU 11, a RAM 12, a ROM 13, an internal storage device such as a flash memory 14 or the like, and a timer 15. The CPU 11 performs computations and overall control. The RAM 12 is used as a working memory for various types of computational processing that the CPU 11 performs and also stores route search data, route data on a route that is found, link IDs for which there is traffic restriction information, and the like. The ROM 13 stores a control program, as well as a route change guidance processing program that informs the user of a change to another route to avoid congestion, a word storage routine, a receiving and recording routine, and a search routine of the present embodiment, and the like. The internal storage device such as the flash memory 14 or the like stores a program that is read out from the ROM 13. The timer 15 measures time.

Various types of programs are stored in the ROM 13, and various types of data are stored in the RAM 12. Programs, data, and the like are also read out from an external storage device, a memory card, or the like and written to the flash memory 14. The programs, the data, and the like can also be updated by replacing the memory card or the like, and by installing specified programs, data, and the like from an external source.
The current position detection unit 5 that detects the current position of the host vehicle includes a GPS sensor 51, a geomagnetic sensor 52, a distance sensor 53, a steering sensor 54, a gyroscopic sensor 55 that serves as a heading detection unit, and an altimeter 56, as well as a vehicle speed sensor 57 that detects the speed of the host vehicle and the distance traveled. Note that the distance sensor 53 and the vehicle speed sensor 57 can be a single unit.

The navigation device of the first embodiment is constituted such that road traffic information such as information that pertains to traffic congestion and the like, as well as traffic restriction information and the like, which is prepared from information that is collected by traffic control systems of the police, the Japan Public Highway Corporation, and the like, can be received from the Vehicle Information and Communication System 72 at specified time intervals through the network 71. The road traffic information is detailed information that pertains, for example, to road traffic information such as road congestion information that pertains to road congestion and the like, as well as information on traffic restrictions and the like due to road work, building construction work, and the like. In the case of the road congestion information, the detailed information includes a VICS link ID that will be described later, the actual length of the congestion, the estimated time that the congestion will be resolved, and the like. In the case of the traffic restriction information, the detailed information includes the VICS link ID, the period of time that the road work, building construction work or the like will continue, the type of traffic restriction such as a closed road, a location where traffic moves through in alternating directions in one lane, or a lane restriction, the time period for the traffic restriction, and the like.

A communication system such as a wireless LAN, a telephone network, a public communication network, a dedicated communication network, or the like, for example, may be used as the network 71. A communication system employing satellite CS broadcasting, BS broadcasting, digital terrestrial broadcasting, FM multiplex broadcasting, and so on may also be used. Further, a non-stop Electronic Toll Collection (ETC) system, a Dedicated Short Range Communication (DSRC) system, or the like that is used in Intelligent Transportation Systems (ITS) can also be used.

The characteristic configuring elements that are included in the navigation device according to the first embodiment will be explained more specifically with reference to FIG. 1.
Various peripheral devices, such as the operation unit 2, the display 3, the speaker 4, and the communication unit 7, are electrically connected to the computation and control unit 1. The operation unit 2 is configured from a plurality of operation switches, such as various keys and the like, that are operated when the current position is corrected when the vehicle starts moving, when a departure point is input as a guidance start point, when a destination is input as a guidance end point, when a search for information that pertains to facilities is performed, and the like. Based on switch signals that are output by operations of the various switches of the operation unit 2, the computation and control unit 1 performs control of the various types of corresponding operations.
Note that a keyboard, a mouse, a bar code reader, a remote control device for remote operation, and the like may be used as the operation unit 2. In the present embodiment, the operation unit 2 may also be configured in the form of a touch panel that is provided on a front face of the display 3.

The display 3 displays operation guidance, an operation menu, key guidance, route guidance from the current position to a destination, guidance information along the route, route change guidance information that will be described later, traffic information, news, a weather forecast, the time, e-mail, a television program, and the like.
Note that a CRT display, a plasma display, an EL display, or the like may be used instead of the display 3. A hologram device that projects a hologram on the front windshield of the vehicle may also be used. The display 3 may also include a touch panel that is used as the operation unit 2.
The speaker 4, based on a command from the computation and control unit 1, outputs voice guidance that provides guidance for driving on the guided route, as well as voice guidance that provides guidance on changing the route for which the route guidance is provided. Note that the voice guidance that the speaker 4 outputs can be a synthesized voice and can also include various types of sound effects and various types of guidance information that are stored in memory in advance. In particular, in the present embodiment, voice guidance that announces the existence of traffic information requiring attention may be output, or such traffic information may be directly reproduced as voice guidance.

The GPS sensor 51 detects the current position of the host vehicle on the Earth, as well as the current time, by receiving radio waves that are generated by artificial satellites. The geomagnetic sensor 52 detects the heading of the host vehicle by measuring geomagnetism. The distance sensor 53 detects a distance between specified positions on a road. The distance sensor 53 may measure a revolution speed of a wheel of the host vehicle and detect the distance based on the measured revolution speed, for example. However, the distance sensor 53 may also detect the distance by integrating the output of the vehicle speed sensor 57.
The steering sensor 54 detects a steering angle of the host vehicle. For example, an optical rotation sensor that is attached to a rotating portion of the steering wheel, a rotational resistance sensor, an angle sensor that is attached to a wheel, or the like may be used as the steering sensor 54.
The gyroscopic sensor 55 detects a turning angle of the host vehicle. For example, a gas rate gyroscope, a vibratory gyroscope, or the like may be used as the gyroscopic sensor 55. Furthermore, by integrating the turning angle detected by the gyroscopic sensor 55, the heading of the host vehicle can be detected.

The communication unit 7 may be, for example, a beacon receiver that receives various types of road traffic information that is transmitted from the Vehicle Information and Communication System 72 or the like, including congestion information, traffic restriction information, parking site information, traffic accident information, service area crowding statuses, and the like, in the form of a radio beacon, an optical beacon, or the like through a radio beacon device, an optical beacon device, or the like that is installed along the road. The communication unit 7 may also be a network device that is capable of communication in the communication system that serves as the network 71, such as a communication network or the like. The communication unit 7 also includes an FM receiver that receives not only the information from the Vehicle Information and Communication System 72, but also FM multiplex information that includes information such as news, a weather forecast, and the like as FM multiple broadcasting via an FM broadcasting station. Note that the beacon receiver and the FM receiver can be provided in the form of a single receiver unit and can also be provided separately.

In the present embodiment, a case in which a hard disk is used as the data processing storage unit 6 will be explained. The hard disk is provided with a function for reading a traffic information database (hereinafter simply called a "DB") 61, a map information DB 64, specified programs, and the like. Note that in the present embodiment, the hard disk is used as the data processing storage unit 6, but other than the hard disk, a memory card, a DVD, an optical disk, or the like can also be used as an external storage device.

Congestion information 62 is stored in the traffic information DB 61. The congestion information 62 is created from road traffic information that pertains to current road congestion and the like and that includes the actual length of the congestion, the estimated time that the congestion will be resolved, and the like that are received from the Vehicle Information and Communication System 72. Traffic restriction information 63 is also stored in the traffic information DB 61. The traffic restriction information 63 is created from road traffic information that pertains to information on traffic restrictions and the like due to road work, building construction work, and the like that are received from the Vehicle Information and Communication System 72. Note that in the present embodiment, the information in the traffic information DB 61 is not broadcast information from a broadcasting station, but is information that is obtained according to the VICS link ID.
Each road traffic information item that is received from the Vehicle Information and Communication System 72 includes the VICS link ID, along with information such as type information, a length of a congested zone, a degree of congestion, and the like. The VICS link ID is an identification number that is assigned to a plurality of VICS links, the VICS links being standardized links into which a road is divided at specified intersections for the purpose of providing driving guidance. Note that the road traffic information for each VICS link includes the coordinates of the start point and the end point of the VICS link, the distance between the start point and the end point, and the like.

The information on roads that is stored in the map information DB 64 is not the same as the information on the VICS links. Specifically, the roads (links) are generally divided into smaller segments than the VICS links. Accordingly, the traffic information DB 61 includes a conversion table (a comparison table) of the VICS link IDs and the link IDs that are assigned as identification numbers to the individual roads. This makes it possible to specify the link IDs based on the VICS link IDs. Therefore, receiving the VICS link ID from the Vehicle Information and Communication System 72 makes it possible for the navigation device to use the VICS link ID to specify a road segment for which road traffic information such as congestion information or the like should be displayed. Furthermore, the VICS link ID in the road traffic information that was received from the Vehicle Information and Communication System 72 and that pertains to the current road congestion or the like is converted to the link ID and stored as the congestion information 62. The VICS link ID in the road traffic information that was received from the Vehicle Information and Communication System 72 and that pertains to the traffic restriction information or the like is also converted to the link ID and stored as the traffic restriction information 63.

The map information DB 64 stores navigation map information 65 that is used for driving guidance and route searching in the navigation device according to the present embodiment. The navigation map information 65 includes various types of information that are necessary for route guidance and map displays. For example, the navigation map information 75 may include new road information for specifying new roads, map display data for displaying maps, intersection data that pertains to individual intersections, node data that pertains to node points, link data that pertains to roads that are a type of facility, route search data for route searching, shop data of trademark-like icons and the like that pertain to points of interest (POIs) such as shops and the like that are a type of facility, search data for searching for geographical locations, and the like. The contents of the map information DB 64 are updated by downloading, through the communication unit 7, update information that is distributed from a map information distribution center.

The map display data in particular is constituted by units obtained by dividing a 10 km x 10 km two-dimensional mesh by 4 (length 1/2), 16 (1/4), or 64 (1/8). The unit of each geographical area is set such that the amount of data in each unit is substantially identical. The smallest unit, which is divided by 64, has an area of approximately 1.25 km squared.

The node data includes data that pertains to actual road junctions (including intersections, T junctions, and so on), the coordinates (position) of node points set at predetermined distance intervals in accordance with the radius of curvature of each road and so on, node attributes indicating whether a node corresponds to an intersection or the like, a connection link number list, which is a list of link IDs, i.e. identification numbers of links, that connect to nodes, an adjacent node number list, which is a list of node numbers of nodes that are located adjacent to other nodes via links, the height (elevation) of each node point, and the like.

The link data includes data that pertains to each link that is included in a road, as well as data on the road to which each link belongs, such as the width, the slope, the cant, and the bank of the road, the state of the road surface, the number of lanes in the road, locations where the number of lanes decreases, locations where the road width narrows, crosswalks, and the like. The link data also includes data that pertains to corners, such as the radii of curvature, intersections, T junctions, entrances to and exits from the corners, and the like. The link data also includes data that pertains to road attributes, such as downhill roads, uphill roads, and the like. The link data further includes data that pertains to road types, such as ordinary roads like national routes, prefectural routes, city streets, and the like, as well as toll roads like national expressways, urban expressways, ordinary toll roads, toll bridges, and the like. In addition, the link data includes data that pertains to toll roads, such as data on roads (ramps) for toll road entrances and exits, toll booths (interchanges), and the like.

The route search data includes data that is used in searching for and displaying a route to a set destination, cost data that is used in computing a search cost that includes the costs of passing through node points (hereinafter simply called a "node cost") and the costs of the links that make up the route (hereinafter simply called a "link cost"), route display data for displaying, on a map on the display 3, a guidance route that is selected by a route search, and the like.
The shop data includes data that pertains to POIs in various regions, such as hotels, hospitals, gasoline stations, parking sites, tourist facilities, and the like, as well as IDs that specify the POIs. Note that the map information DB 64 also contains voice output data for outputting specified information through the speaker 4 of the navigation device.

An image color processing unit 81 of the data processing storage unit 6, after selecting "Settings" from a main menu screen 3A of the display 3 in FIG 2(a), becomes a "Settings" display screen 3B shown in FIG. 2(b). Selecting "Image Color Settings" here displays a display screen 3C shown in FIG. 2(c).
In FIG. 2(c), an operation switch column 21 formed from push button switches is disposed on the left side of the display 3 in the drawing, and an operation switch column 22 is similarly provided on the right side of the display 3. The operation switch columns 21 and 22 include switches such as a power button, a traffic information button, an audio button, a TV/AM/FM button, a disc button, image quality setting cancel buttons, volume buttons, a current position button, G-Book information buttons, a destination button, menu buttons, and tune track buttons.

Between the operation switch columns 21 and 22, the display screen 3C is constituted by a map view screen 3c1 that displays a map for finding routes from a vehicle departure point to a destination and provides route guidance along a selected route, and a color change operation screen 3c2 that changes the color and brightness of various icons. More specifically, the map view screen 3c1 that displays a map for route guidance also displays icons integrated on the same display screen, namely icons that indicate current navigation functions such as a heading mark 3a, a scale display 3b, a GPS mark, a time display, a host vehicle mark, and a VICS time stamp as shown in the drawing. The map view screen 3c1 also displays icons that indicate touch switches, namely icons that are operated to change current navigation functions, such as Detail 3c, <<OFF 3d, and Change Display 3e as shown in the drawing, as well as Save Location, Wide Area, Set Destination, Default, Facilities, Search Again, Go Home, and History.

Here, the icons such as the heading mark 3a, the scale display 3b, the GPS mark, the time display, the host vehicle mark, and the VICS time stamp indicate currently operating navigation functions, and do not indicate operation positions that change navigation functions. Furthermore, Detail 3c, OFF 3d, and Change Display 3e, as well as Save Location, Wide Area, Set Destination, Default, Facilities, Search Again, Go Home, History, and the like indicate regions that function as touch switches for which icons are displayed, and which are operated to change a state of the current navigation functions.
An icon storage unit 82 shown in FIG. 1 stores information that pertains to the display screen 3C in terms of displaying icons that indicate these current navigation functions and icons that indicate touch switches that are operated to change the current navigation functions. A color change operation screen storage unit 83 shown in FIG 1 stores the display screen 3C, i.e., an integrated screen of the color change operation screen 3c2 that changes the color and/or brightness of icons that indicate navigation functions and icons that indicate touch switches that are operated to change navigation functions, and the map view screen 3c1 that displays a map for route guidance.

The color change operation screen 3c2 for setting an image color is provided with icons including these touch switches: Blue 31 for setting a prescribed blue shade, Green 32 for setting a prescribed green shade, Amber 33 for setting a prescribed amber shade, and User 34 for setting a color according to the user's preferences. These touch switches change the color of all icons, that is, icons that indicate current navigation functions and icons that are operated to change current navigation functions.
The color change operation screen 3c2 includes a one-pitch up key 35 and a fast-forward up key 36, a one-pitch down key 36 and a fast-forward down key 38, and an indicator 37 that indicates the change in the current color if the touch switch, User 34, is operated. The color change operation screen 3c2 also includes an icon, Done 30, that is a touch switch for saving the value once the color is determined using the touch switch, User 34.

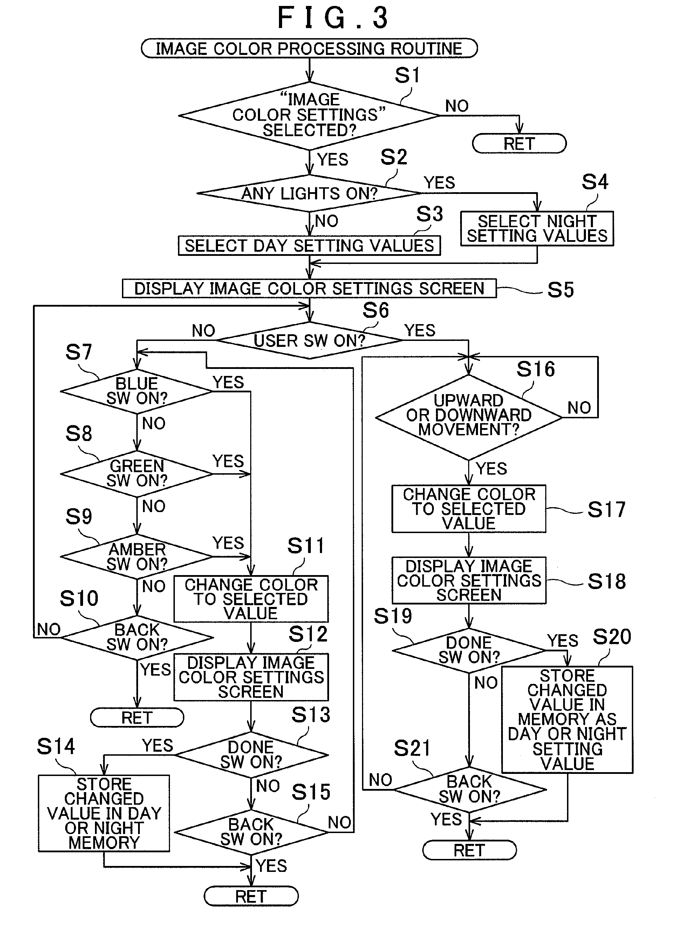

Next, the image color processing program that is executed by the computation and control unit 1 in the navigation device having the configuration described above will be explained based on FIG. 3.
FIG. 3 is a flowchart of the image color processing routine of the navigation device according to this embodiment of the present invention.
The program of the image color processing routine shown in FIG. 3 is set as an initialization of the main routine. This program is equivalent to the function of the image color processing unit 81 shown in FIG. 1.
First, after using the operation unit 2 to select "Settings" from the main menu screen 3A of the display 3 in FIG. 2(a), the Settings screen 3B in FIG. 2(b) appears. Selecting "Image Color Settings" in the Settings screen 3B starts the processing of the routine of FIG. 3 in the main program. If "Image Color Settings" is not selected, the processing is terminated at step S 1 and the routine is exited.

Once it is confirmed at step S1 that "Image Color Settings" is selected, it is determined at step S2 whether any of the headlamps, side lamps, fog lamps, or the like are turned on. If not turned on, it is determined that it is daytime around the vehicle, and a display setting condition based on day setting values is read out at step S3. If turned on, it is determined that it is nighttime around the vehicle, and a display setting condition based on night setting values is read out at step S4. At step S5, using the setting condition based on the day or night setting values, the display screen 3C shown in FIG. 2(c) and stored in the color change operation screen storage unit 83 is displayed.

Next, at step S6, it is determined whether the touch switch, User 34, that sets a color according to the user's preferences was pressed. At step S7, it is determined whether the touch switch, Blue 31, that sets the color to a prescribed blue shade was pressed. At step S8, it is determined whether the touch switch, Green 32, that sets the color to a prescribed green shade was pressed. And at step S9, it is determined whether the touch switch, Amber 33, that sets the color to a prescribed amber shade was pressed. The routine from step S6 to step S10 is repeatedly executed until the touch switch, Back 40, is pressed at step S10.
If it is determined at step S7, S8, or S9 that any one of the respective touch switches, Blue 31, Green 32, or Amber 33, was pressed, then at step S11, the color is changed to the selected value of the selected color. At step S12, using the setting condition according to the day or night setting values and based on the selected value, the display screen 3C shown in FIG. 2(c) and stored in the color change operation screen storage unit 83 is changed and displayed.

If the condition that changed the color is satisfactory and it is determined at step S13 that the touch switch, Done 30, was pressed, the value is registered in memory as a day or night setting value at step S14, and the routine is exited. However, if the condition that changed the color is not judged satisfactory and the touch switch, Done 30, is not pressed at step S13, the routine from step S7 to step S10 is repeatedly executed until the touch switch, Back 40, is pressed at step S15. Note that if the touch switch, Back 40, is pressed at any time during this routine, the routine is exited.

Meanwhile, if it is determined at step S6 that the touch switch, User 34, that sets a color according to the user's preferences was pressed, it is determined at step S16 whether the one-pitch up key 35 or the fast-forward up key 36 and whether the one-pitch down key 39 or the fast-forward down key 38 was pressed. At step S17, the color is changed to the selected value of the selected color. At step S 18, using the setting condition according to the day or night setting values and based on the selected value, the display screen 3C shown in FIG. 2(c) and stored in the color change operation screen storage unit 83 is changed and displayed.
If the condition that changed the color is satisfactory and it is determined at step S 19 that the touch switch, Done 30, was pressed, the value is registered in memory as a day or night setting value at step S20, and the routine is exited. However, if the condition that changed the color is not judged satisfactory and the touch switch, Done 30, is not pressed at step S19, the routine from step S16 to step S21 is repeatedly executed until the touch switch, Back 40, is pressed at step S21. Note that if the touch switch, Back 40, is pressed at any time during this routine, the routine is exited.

Further note that at step S2, it is determined whether any of the headlamps, side lamps, fog lamps, or the like are turned on. If not turned on, it is determined that it is daytime around the vehicle, and a display setting condition based on day setting values is read out at step S3; if turned on, it is determined that it is nighttime around the vehicle, and a display setting condition based on night setting values is read out at step S4. The setting values are changed in the subsequent routine. Therefore, having two settings for when any of the headlamps, side lamps, fog lamps, or the like are turned and when the lights are not turned on makes a night color setting and a day color setting possible.
Obviously when carrying out the present invention, the display setting conditions read out at step S3 and step S4 may be stored in a single memory so that there is no day and night difference in colors. Of course, the same condition may be set at step S3 and at step S4.

According to the present embodiment, all icons that indicate current navigation functions and that are operated to change current navigation functions are set to a prescribed color through the color change operation screen 3c2 for setting the image color.
When carrying out the present invention, only the color of icons that indicate current navigation functions such as the heading mark 3a, the scale display 3b, the GPS mark, the time display, the host vehicle mark, and the VICS time stamp, and icons that are operated to change current navigation functions such as Detail 3c, <<OFF 3d, Change Display 3e, Save Location, Wide Area, Set Destination, Default, Facilities, Search Again, Go Home, and History can be changed.

According to the first embodiment, a single display screen 3C is formed as an integrated screen of the color change operation screen 3c2 that changes the color of icons that indicate navigation functions and icons that indicate touch switches that are operated to change navigation functions, and the map view screen 3c1 that displays a map for route guidance. The display screen 3C is stored in the color change operation screen storage unit 83 of FIG. 1. When carrying out the present invention, the color change operation screen 3c2 that changes the color of icons that indicate navigation functions and icons that indicate touch switches that are operated to change navigation functions, and the map view screen 3c1 that displays a map for route guidance are displayed on the same screen and set so that there is no color disagreement. However, when carrying out the present invention, a screen changeover touch switch may be additionally provided and color settings made by changing the screen between the map view screen 3c1 and the color change operation screen 3c2 at a predetermined timing.

According to the former, if the color change operation screen 3c2 that changes the color of icons that indicate navigation functions and icons that indicate touch switches that are operated to change navigation functions, and the map view screen 3c1 that displays a map for route guidance are displayed on the same screen, settings can be performed such that there is no disagreement between the color to be set and the adjustment area in the color change operation screen 3c2. According to the latter, when the map view screen 3c1 and the color change operation screen 3c2 are set on different screens, the map view screen 3c1 becomes an ordinary screen of only navigation functions. Therefore, the icon color can be set under a normal usage condition so there is no disagreement between a desired interval and the adjusted interval.
In addition, the map view screen 3c1 is displayed without reduction, and in terms of matching the image in use with the image during setting, there is no change in the image regardless of whether the color change operation screen 3c2 is displayed. Even more preferably, the area of the color change operation screen 3c2 may be set smaller than the area of the embodiment.

### Second Embodiment

In the first embodiment, an example was described in which icons are displayed using a single color superposed on the same display screen as the map view screen 3c1 that displays a map for route guidance, namely, icons that indicate current navigation functions such as the heading mark 3a and the scale display 3b as shown in the drawing, as well as the GPS mark, the time display, the host vehicle mark, and the VICS time stamp, and icons that indicate touch switches, that is, icons that are operated to change current navigation functions such as Detail 3c, <<OFF 3d, and Change Display 3e as shown in the drawing, as well as Save Location, Wide Area, Set Destination, Default, Facilities, Search Again, Go Home, and History. However, there may be times when changing only the color of a specific icon is desired, for example, if the touch switch, Go Home, is often used, if a plurality of touch switch icons are lined up, or if a particular icon is hard to find.
In such cases, a predetermined ID may be assigned to the icon stored in the icon storage unit 82 in FIG 1, and a color set per ID group.

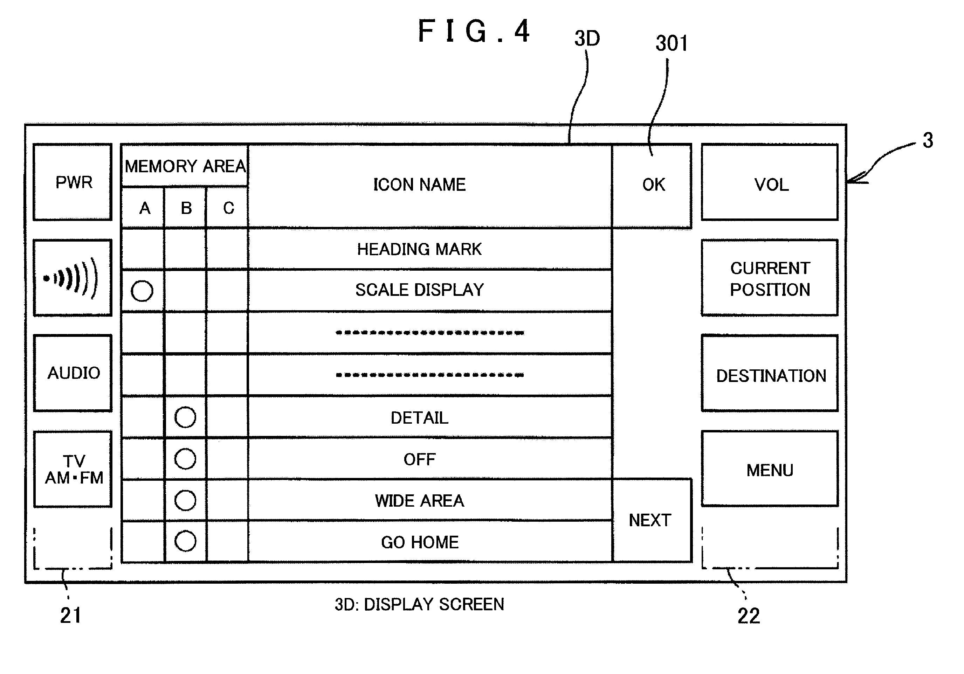

An example of setting a color per group will be explained using FIGS. 4 to 6.

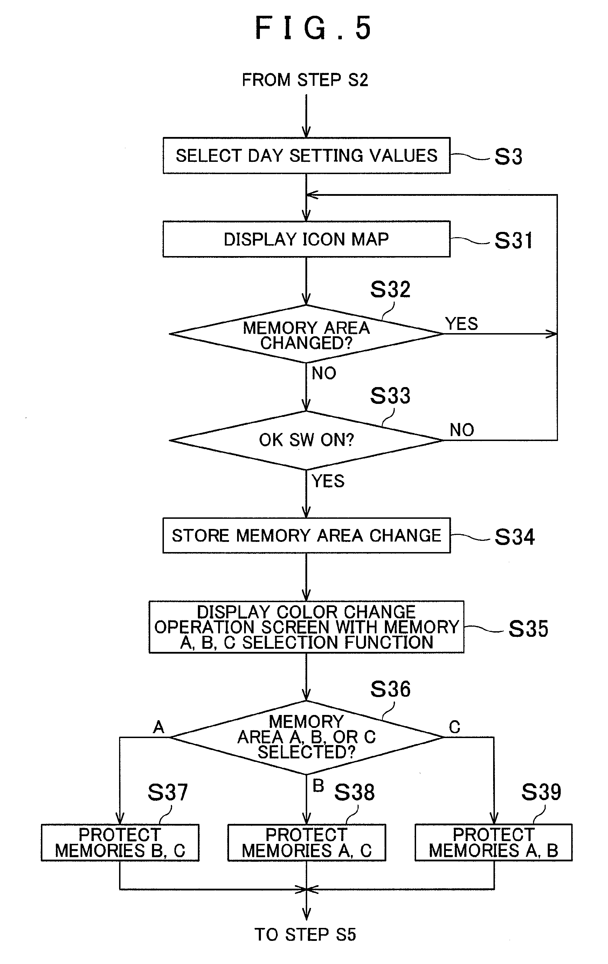

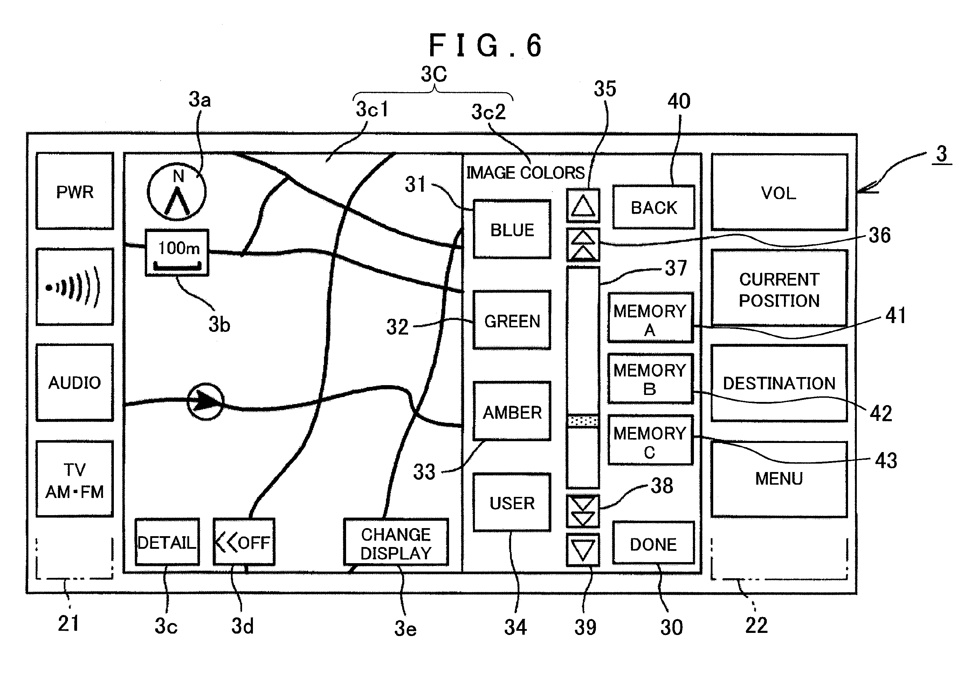

FIG. 4 is an explanatory drawing of an icon map stored in an icon storage unit according to a second embodiment of the present invention, and FIG. 5 is a flowchart of an essential portion of the image color processing routine of the navigation device according to the second embodiment of the present invention to be used as an addition to FIG. 3. FIG. 6 is an explanatory drawing of a display screen that corresponds to FIG. 2(c) and is displayed on the display of the navigation device according to this embodiment of the present invention.
In FIG. 4, Memory A, Memory B, and Memory C are assigned as predetermined IDs to the icons stored in the icon storage unit 82 in FIG. 1, and a color is set per Memory A, Memory B, and Memory C group. A standard color is normally set for Memory A, Memory B, and Memory C. Here, the circles in the columns of Memory A, Memory B, and Memory C refer to groups of the same color.
In such a map, to change only the color of the icon for the touch switch, Go Home, for example, the color of the icon of the touch switch, Go Home, is specified in the unused Memory C so that a different color can be set for only the icon of the touch switch, Go Home.

To process this using the function of the image color processing unit 81 shown in FIG. 1, the following processing program is performed. The program in FIG. 5 is a program inserted immediately after step S3 and step S4 of the program in FIG. 3. Explanations of the routine before and after are omitted here.
It is determined that it is daytime around the vehicle, and a display setting condition based on day setting values is read out at step S3. Next, at step S31, the icon map is expressed as a display screen 3D shown in FIG. 4 for changing the color of a specific icon among the day setting values. The memory area is changed at step S32 by pressing a corresponding touch switch area to set one of the groups, Memory A, Memory B, or Memory C. After a touch switch, OK 301, is pressed at step S33, the changed memory area is stored at step S34. At step S35, the display screen 3c2 shown in FIG. 6, which includes a function for selecting the groups, Memory A, Memory B, and Memory C, and is stored in the color change operation screen storage unit 83, is displayed so that the user can determine which group among the groups, Memory A, Memory B, and Memory C, on the display screen will have its color adjusted. When any one of a Memory A touch switch 41, a Memory B touch switch 42, and a Memory C touch switch 43 is pressed, only icons belonging to the selected group, Memory A, Memory B, or Memory C, can be changed. Icons in the other memories cannot be changed and are protected at any of steps S37 to S39.
At step S5, under the setting condition based on the day or night setting values, the display screen 3C shown in FIG. 2(c) and stored in the color change operation screen storage unit 83 is displayed, and then the processing after step S5 of the program shown in FIG. 3 is executed.

Thus, in the navigation device of the second embodiment, icons that indicate navigation functions such as the heading mark 3a, the scale display 3b, the GPS mark, the time display, the host vehicle mark, and the VICS time stamp, and/or icons that indicate touch switches that are operated to change navigation functions such as Detail 3c, <<OFF 3d, Change Display 3e, Save Location, Wide Area, Set Destination, Default, Facilities, Search Again, Go Home, and History on the display screen 3C can be grouped and a color set per group. Colors may be set for icons stored in the icon storage portion 82 of FIG. 1 per the prescribed groups, Memory A, Memory B, and Memory C. Therefore, by changing the color of only specific icons, the visibility and operability of the overall design can be improved.

The navigation device according to the first and second embodiments finds routes from a vehicle departure point to a destination, and provides route guidance along a selected route. The navigation device includes: the display screen 3C that, in addition to displaying a map for route guidance on the map view screen 3c1 of the display, also displays icons that indicate current navigation functions such as the heading mark 3a and the scale display 3b, and/or icons that indicate touch switches that are operated to change current navigation functions such as Detail 3c, <<OFF 3d, and Change Display 3e; and the color change operation screen 3c2 that changes the color of icons that indicate navigation functions such as the heading mark 3a and the scale display 3b, and/or icons that indicate touch switches that are operated to change navigation functions such as Detail 3C, <<OFF 3d, and Change Display 3e on the display screen 3C.

Thus, the navigation device that finds routes from a vehicle departure point to a destination and provides route guidance along a selected route also displays a map for route guidance as the map view screen 3c1 on the display screen 3C. In addition, the navigation device displays icons that indicate current navigation functions such as the heading mark 3a and the scale display 3b, and icons that are operated to change current navigation functions such as Detail 3C, <<OFF 3d, and Change Display 3e superposed on the map view screen 3c1. Furthermore, the color change operation screen 3c2 is used to change the color of icons that indicate navigation functions such as the heading mark 3a and the scale display 3b, and icons that are operated to change navigation functions such as Detail 3C, <<OFF 3d, and Change Display 3e on the display screen 3C.
Accordingly, the display screen 3C can be expressed in colors that match the interior design of the vehicle. Moreover, in the map used for route guidance, only icons that indicate navigation functions such as the heading mark 3a and the scale display 3b, and icons that are operated to change navigation functions such as Detail 3c, <<OFF 3d, and Change Display 3e are changed, without changing the colors of the map view screen 3c1 overall. It is thus possible to set colors according to natural usage conditions in terms of general map colors, which also blend well in terms of the overall design. Furthermore, instead of setting three or four specific colors, colors can be more finely adjusted. Therefore, a desired color can be selected in accordance with the owner's ease of viewing the display screen 3C and color preferences.

The color change operation screen 3c2 of the navigation device according to the first and second embodiments is displayed on the same screen as a screen that displays icons that indicate navigation functions such as the heading mark 3a and the scale display 3b, and/or icons that are operated to change current navigation functions such as Detail 3C, <<OFF 3d, and Change Display 3e on the display screen 3C. The display color of icons that indicate navigation functions such as the heading mark 3a and the scale display 3b, and/or icons that are operated to change navigation functions such as Detail 3C, <<OFF 3d, and Change Display 3e can be changed.
Because the color change operation screen 3c2 is displayed on the same screen as a screen that displays icons that indicate navigation functions such as the heading mark 3a and the scale display 3b, and/or icons that are operated to change navigation functions such as Detail 3C, <<OFF 3d, and Change Display 3e on the display screen 3C, and the display color of icons that indicate navigation functions, i.e., the heading mark 3a and the scale display 3b, and icons that are operated to change navigation functions such as Detail 3C, <<OFF 3d, and Change Display 3e, can be changed from the display screen 3C, color selections can be made on the screen of the same display screen 3C. There is thus no color disagreement between the color selected on the color change operation screen 3c2 and icons that indicate navigation functions such as the heading mark 3a and the scale display 3b and icons that are operated to change navigation functions such as Detail 3c, <<OFF 3d, and Change Display 3e.

The color change operation screen 3c2 according to the first and second embodiments can change the display color of icons that indicate navigation functions such as the heading mark 3a and the scale display 3b, and/or icons that are operated to change navigation functions such as Detail 3C, <<OFF 3d, and Change Display 3e on the display screen 3C to a different color for day and night.
Accordingly, because the display color of icons that indicate navigation functions such as the heading mark 3a and the scale display 3b, and icons that are operated to change navigation functions such as Detail 3C, <<OFF 3d, and Change Display 3e on the display screen 3C can be changed to a different color for day and night, the color of the interior when the vehicle is in darkness can serve as a light source and express a color different from that used during the day.

The color change operation screen 3c2 according to the first and second embodiments can set the brightness of the display color of icons that indicate navigation functions such as the heading mark 3a and the scale display 3b, and/or icons that are operated to change navigation functions such as Detail 3C, <<OFF 3d, and Change Display 3e on the display screen 3C to a fixed brightness for day and night. In other words, by performing a control so as to match the brightness of the selected color and achieve a uniform brightness, the brightness of the display color of the icons can be fixed for day and night.
Accordingly, by setting a constant brightness for day and night for the display color of icons that indicate navigation functions such as the heading mark 3a and the scale display 3b, and/or icons that are operated to change navigation functions such as Detail 3C, <<OFF 3d, and Change Display 3e on the display screen 3C, the display remains natural and normal even in the transition from day to night and vice versa.
Obviously, a control may be added that sets a fixed intensity and brightness for colors overall, instead of only for the transition between day and night.

Icons that indicate navigation functions such as the heading mark 3a and the scale display 3b, and/or icons that are operated to change navigation functions such as Detail 3C, <<OFF 3d, and Change Display 3e on the display screen 3C of the navigation device according to the first and second embodiments may exclude icons used for trademark purposes. Icons with meaningful colors may also not be subject to changes in color. In other words, the first and second embodiments may be carried out as long as icons used for trademark purposes are excluded from the concept of icons that indicate navigation functions and icons that are operated to change navigation functions. Icons with meaningful colors, such as marks that indicate national roads (inverted blue triangles with numbers inside) may not be subject to changes in color. Of course, although the colors of icons used for trademark purposes are not changed, the brightness of such icons may be changed. This is also true for icons other than those used for trademark purposes.
Thus, the usage format of emblematic icons serving as trademarks universally and commonly expressed or used for trademark purposes is not automatically changed.

Icons that indicate navigation functions such as the heading mark 3a and the scale display 3b, and/or icons that are operated to change navigation functions such as Detail 3C, <<OFF 3d, and Change Display 3e on the display screen 3C of the navigation device according to the first and second embodiments may be assigned with a code and grouped, and a color set per group.
Therefore, an easily recognizable color can be set for a specific icon.
In the navigation device according to the first and second embodiments, the icons explained in these embodiments of the present invention include facility icons, menu icons, navigation function icons, and navigation operation icons, as well as traffic information icons that indicate traffic information along roads by arrow color, and saved location icons that the user has added for any location. In the VICS display, for example, a red arrow means congestion and a blue arrow means no congestion, and therefore the exclusion of such icons from color changes is assumed.
In addition to icons displayed on a map, icons displayed together with facility names when a facility list is displayed and icons displayed when selecting a facility to be found may also be subject to a setting that changes their color, and are included in the concept of icons according to the present invention.

In an embodiment where icons displayed together with facility names when a facility list is displayed, icons displayed when selecting a facility to be found, and the like are included in the concept of icons according to the present invention, the screen of the color change operation screen 3c2, which changes the color of icons that indicate navigation functions and icons that indicate touch switches that are operated to change navigation functions, may be integrated on the screen of FIG. 2(b) to form the single display screen 3B, which is stored in the color change operation screen storage unit 83 of FIG. 1.
In such case, the embodiment according to the present invention may be constituted such that, in a navigation device that finds routes from a vehicle departure point to a destination and provides route guidance along a selected route, the display screen 3B, which displays icons that indicate navigation functions and icons that indicate touch switches that are operated to change navigation functions, is integrated with the color change operation screen 3c2, which changes the color of icons such as "Image Color Settings" that indicate navigation functions and/or icons that indicate touch switches that are operated to change other navigation functions.

### Third Embodiment

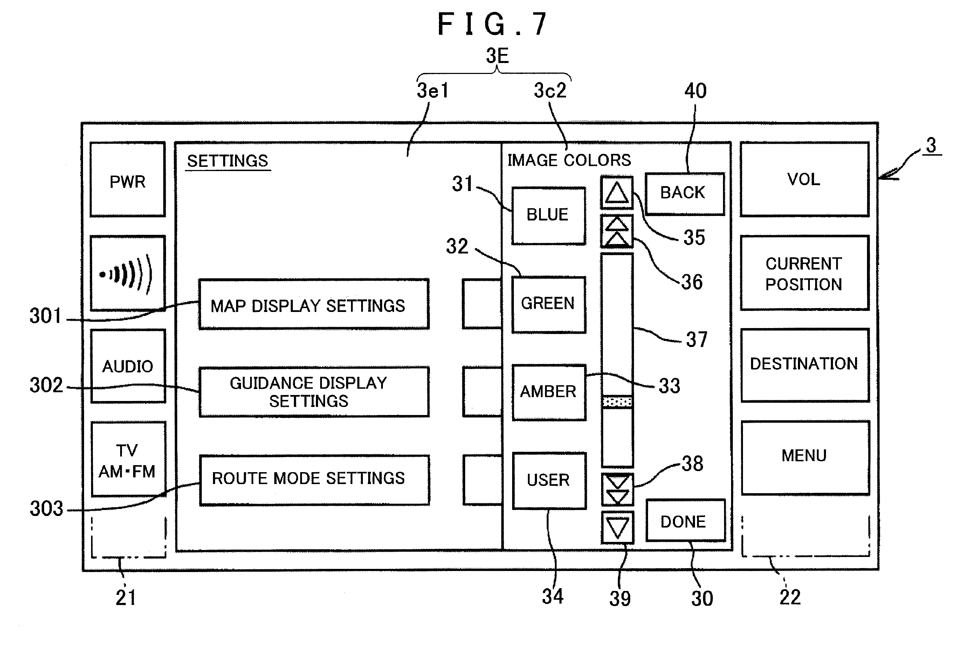

Specifically, as shown in FIG. 7, this is expressed as a display screen 3E.
FIG 7 is an explanatory drawing of a display screen that corresponds to FIG. 2(c) and is displayed on the display of the navigation device according to a third embodiment of the present invention.
A navigation device that finds routes from a vehicle departure point to a destination and provides route guidance along a selected route includes a display screen 3E, which has an icon view screen 3e1 that displays icons that indicate touch switches that operate navigation functions such as Map Display Settings 301, Guidance Display Settings 302, and Route Mode Settings 303; and the color change operation screen 3c2 that changes the color of icons that indicate the touch switches, Map Display Settings 301, Guidance Display Settings 302, and Route Mode Settings 303,which operate navigation functions on the display screen 3E.

By thus changing the color of the display screen 3E having the icon view screen 3e1, which displays icons that indicate the touch switches, Map Display Settings 301, Guidance Display Settings 302, and Route Mode Settings 303, that operate navigation functions, the colors of most of the icons that operate navigation functions can be changed. Especially when the first and/or second and third embodiments are used at the same time, the total design has a good sense of uniformity and can express the driver's tastes.
In terms of the overall screen, changing the color of the display screen 3E having the icon view screen 3e1 that shows icons that indicate the touch switches, Map Display Settings 301, Guidance Display Settings 302, and Route Mode Settings 303, that operate navigation functions has a considerable color changing effect because of the wide screen area.

### Fourth Embodiment

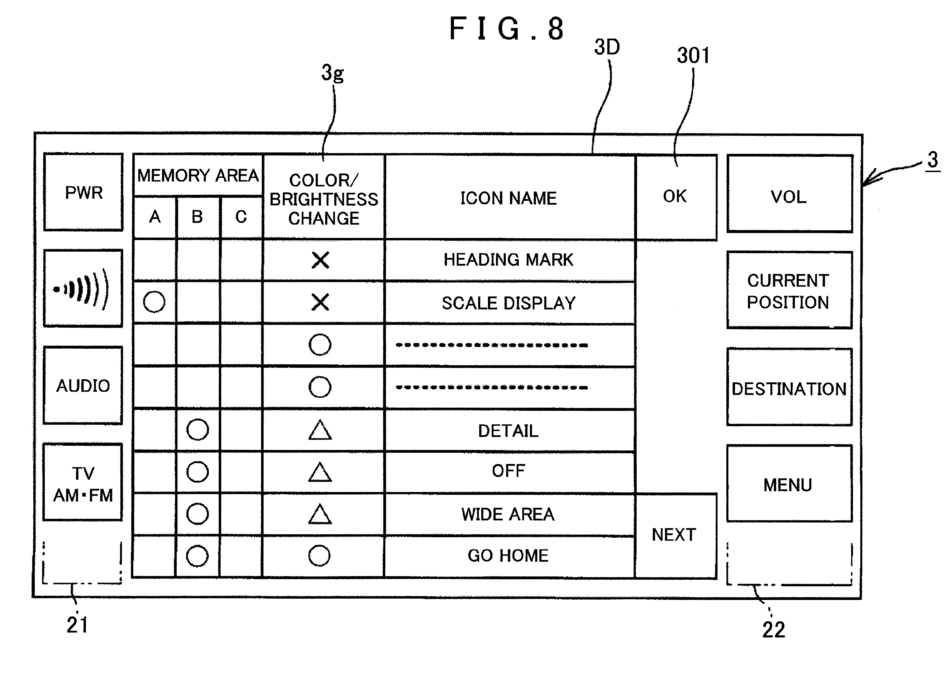

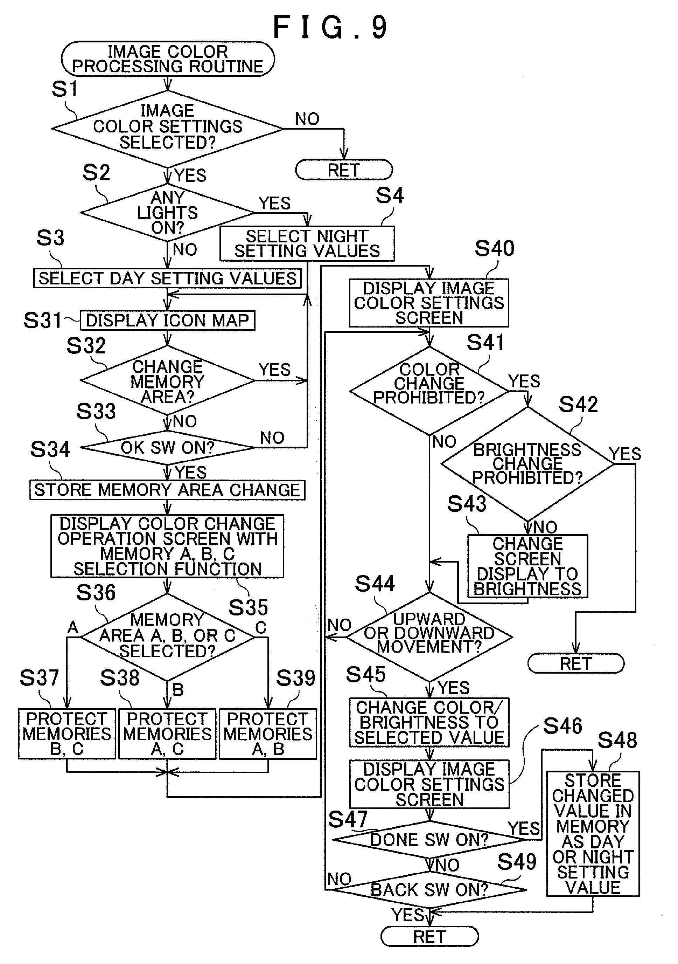

FIG. 8 is an explanatory drawing of an icon map stored in an icon storage unit according to a fourth embodiment of the present invention, and FIG. 9 is a flowchart of an essential portion of the image color processing routine of the navigation device according to the fourth embodiment of the present invention.
In FIG. 4, Memory A, Memory B, and Memory C are assigned as predetermined IDs to the icons stored in the icon storage unit 82 in FIG. 1, and a color and brightness are set per Memory A, Memory B, and Memory C group. A standard color is normally set for Memory A, Memory B, and Memory C. Here, the circles in the columns of Memory A, Memory B, and Memory C refer to groups of the same color.
A color/brightness change display 3g is data regarding whether color changing of an icon is enabled or disabled depending on the type of icon, and writes information on whether color changing is enabled or disabled in response to a color change operation. In the present embodiment, the written data allows color changes and brightness changes, or prohibits color changes and only allows brightness changes, or prohibits both color changes and brightness changes.

With regard to color and brightness changes, a cross indicates that both color and brightness changes cannot be made, a triangle indicates that color changes cannot be made although brightness changes can be made. A circle indicates that both color changes and brightness changes can be made. More specifically, whether or not color changes and brightness changes are possible is stored using flags in a memory corresponding to the icons. For example, when trying to change only the color of the icon of the heading mark, no change is allowed because there is a cross in the corresponding color/brightness change box. To change only the color of the icon for the touch switch, Go Home, the color of the icon of the touch switch, Go Home, is specified in the unused Memory C so that a different color can be set for only the icon of the touch switch, Go Home. Because there is a triangle in the corresponding color/brightness change box that allows only changes to brightness, it is not possible to change only the color of the icon for the touch switch, Wide Area. However, the brightness of the icon of the touch switch, Wide Area, may be specified in the unused Memory C so that a different brightness can be set for only the icon of the touch switch, Wide Area.

To process this using the function of the image color processing unit 81 shown in FIG. 1, the following processing program is performed. Note that the routine from step S6 to step S 15 shown in FIG. 3 is omitted here for ease of understanding. For processing under the present routine, the routine from determining whether the touch switch, User 34, that sets a color according to the user's preferences was pressed and onward may be inserted after step S5.
Once it is confirmed at step S1 that "Image Color Settings" is selected, it is determined at step S2 whether any of the headlamps, side lamps, fog lamps, or the like are turned on. If it is determined that it is daytime around the vehicle, a display setting condition based on day setting values is read out at step S3. If turned on, it is determined that it is nighttime around the vehicle, and a display setting condition based on night setting values is read out at step S4.

Next, at step S31, the icon map is expressed as a display screen 3D in FIG. 8 for changing the color of a specific icon among the day setting values. The memory area is changed at step S32 by pressing a corresponding touch switch area and referencing the groups, Memory A, Memory B, or Memory C, to set the icon in a memory area. A plurality of icons can be selected at once. After the touch switch, OK 301, is pressed at step S33, the changed icon is stored at step S34. At step S35, the display screen 3c2 that includes a function for selecting the groups, Memory A, Memory B, and Memory C, and is stored in the color change operation screen storage unit 83, is displayed so that the user can determine which group among the groups, Memory A, Memory B, and Memory C, on the display screen will have its color and/or brightness adjusted. When any one of the Memory A touch switch 41, the Memory B touch switch 42, and the Memory C touch switch 43 is pressed, only icons belonging to the selected group, Memory A, Memory B, or Memory C, can be changed. Icons in the other memories cannot be changed and are protected at any of steps S37 to S39.
At step S40, under the setting condition read out based on the day or night setting values, the display screen 3C shown in FIG. 2(c) and stored in the color change operation screen storage unit 83 is displayed, and then the processing after step S40 of the program shown in FIG. 9 is executed.

At step S41 and step S42, it is determined whether a color change, whether a brightness change, and whether both a color change and a brightness change are prohibited for the selected icon or the icon in Memory A, Memory B, or Memory C. If both are prohibited, the routine is exited.
If a brightness change is allowed at step S42, the display screen 3C of FIG. 6 is shown at step S43 without Blue 31, Green 32, Amber 33, and User 34. It is then determined at step S44 whether the one-pitch up key 35 or the fast-forward up key 36 and whether the one-pitch down key 39 or the fast-forward down key 38 was pressed. At step S45, the selected color/brightness is changed to the selected value. At step S46, using the setting condition according to the day or night setting values and based on the selected value, the display screen 3C shown in FIG. 2(c) and stored in the color change operation screen storage unit 83 is changed and displayed.

If the condition that changed the color is satisfactory and it is determined at step S47 that the touch switch, Done 30, was pressed, the value is registered in memory as a day or night setting value at step S48, and the routine is exited. However, if the condition that changed the color is not judged satisfactory and the touch switch, Done 30, is not pressed at step S49, the routine from step S41 to step S49 is repeatedly executed until the touch switch, Back 40, is pressed at step S49. Note that if the touch switch, Back 40, is pressed at any time during this routine, the routine is exited.

Thus, in the navigation device of the fourth embodiment, icons that indicate navigation functions such as the heading mark 3a, the scale display 3b, the GPS mark, the time display, the host vehicle mark, and the VICS time stamp, and/or icons that indicate touch switches that are operated to change navigation functions such as Detail 3c, <<OFF 3d, Change Display 3e, Save Location, Wide Area, Set Destination, Default, Facilities, Search Again, Go Home, and History on the display screen 3C can be handled individually or grouped, and color and brightness settings made individually or per group. By storing information regarding the prohibition of color changes and brightness changes in memory for the icons stored in the icon storage unit 82 of FIG. 1, it is possible to have a different color setting for only a specific icon.

Thus, data regarding whether color changes are enabled or disabled depending on the type of icon exists for icons including the touch switches, Blue 31 for setting a prescribed blue shade, Green 32 for setting a prescribed green shade, Amber 33 for setting a prescribed amber shade, and User 34 for setting a color according to the user's preferences, which all change the color of icons that indicate current navigation functions and icons that are operated to change current navigation functions. Therefore, it is possible to change only the color of an icon for which color changing is enabled in response to a color change operation. In addition, brightness adjustments can still be made as necessary for icons having disabled color change data, which can improve the visibility and operability of the overall design.
The example here explains the navigation device according to the fourth embodiment. This embodiment may be used in combination with the first to third embodiments.

The navigation device according to the first to fourth embodiments finds routes from a vehicle departure point to a destination, and provides route guidance along a selected route. The navigation device includes: the display screen 3C that, in addition to displaying a map for route guidance on the map view screen 3c1 of the display, also displays icons that indicate current navigation functions such as the heading mark 3a and the scale display 3b, and/or icons that indicate touch switches that are operated to change current navigation functions such as Detail 3c, <<OFF 3d, and Change Display 3e, which are integrated on the same display screen 3C for displaying maps; and the color change operation screen 3c2 that changes the color of icons that indicate navigation functions such as the heading mark 3a and the scale display 3b, and icons that indicate touch switches that are operated to change navigation functions such as Detail 3C, <<OFF 3d, and Change Display 3e on the display screen 3C. The icons have data regarding whether color changes are enabled or disabled depending on the type of icon. Therefore, it is possible to change the color of an icon for which color changing is enabled in response to a color change operation.

Thus, the icons of the navigation device according to the first to fourth embodiments have data regarding whether color changes are enabled or disabled, that is, whether changes are prohibited, depending on the type of icon. The color of an icon for which color changing is enabled can be changed in response to a color change operation, and brightness changes can also be made as necessary in accordance with a brightness change operation. Therefore, the brightness of icons used for trademark purposes can be changed without changing the color. This is also true for icons other than those used for trademark purposes.

## Claims

1. A navigation device that finds routes from a vehicle departure point to a destination and provides route guidance along a selected route, **characterized by** comprising:
a display screen that displays a map for the route guidance on a display, and displays icons that indicate current navigation functions and/or icons that indicate touch switches that are operated to change current navigation functions integrated on a view screen that displays the map; and
a color change operation screen that changes a color of the icons that indicate navigation functions and/or the icons that indicate touch switches that are operated to change navigation functions on the display screen, wherein
the icons include data on whether color changing is one of enabled and disabled depending on the type of icon, and the color of an icon for which color changing is enabled is changed in response to a color change operation.

2. A navigation device that finds routes from a vehicle departure point to a destination and provides route guidance along a selected route, **characterized by** comprising:
a display screen that displays icons that indicate touch switches that operate current navigation functions; and
a color change operation screen that changes a color of the icons that indicate touch switches that operate navigation functions on the display screen, wherein
the icons include data on whether color changing is one of enabled and disabled depending on the type of icon, and the color of an icon for which color changing is enabled is changed in response to a color change operation.

3. The navigation device according to claim 1 or 2, wherein
the color change operation screen is displayed on the same screen as a screen that displays the icons that indicate navigation functions and/or the icons that indicate touch switches that are operated to change navigation functions on the display screen, and the color of the icons that indicate navigation functions and/or the icons that indicate touch switches that are operated to change navigation functions can be changed from the screen.

4. The navigation device according to any one of claims 1 to 3, wherein
the color change operation screen can change the color of the icons that indicate navigation functions and/or the icons that indicate touch switches that are operated to change navigation functions on the display screen to a different color for day and night.

5. The navigation device according to any one of claims 1 to 4, wherein
the color change operation screen sets the color of the icons that indicate navigation functions and/or the icons that indicate touch switches that are operated to change navigation functions on the display screen to a fixed brightness for day and night.

6. The navigation device according to any one of claims 1 to 5, wherein
the icons that indicate navigation functions and/or the icons that indicate touch switches that are operated to change navigation functions on the display screen exclude icons used for trademark purposes.

7. The navigation device according to any one of claims 1 to 6, wherein
the icons that indicate navigation functions and/or the icons that indicate touch switches that are operated to change navigation functions on the display screen are grouped, and a color is set per group.

8. The navigation device according to any one of claims 1 to 7, wherein
an icon for which color changing is disabled can be set with a brightness.
